# EUROPEAN PATENT APPLICATION

(11) **EP 2 357 126 A2**
(43) Date of publication of application: **17.08.2011**
(21) Application number: 11153554.8
(22) Date of filing: 07.02.2011
(51) Int. Cl.: B62K 19/34, B62M 3/00

(54) **Asymmetrical or off-center bottom bracket shell**

(30) Priority: 09.02.2010 US 702981
(71) Applicant: Vroomen-White Design Inc., Toronto, ON M6A 1J8 (CA)
(72) Inventor: Guichard, Don, Huntington Beach, CA 92649 (US); Rinard, Damon, Toronto Ontario M6P 2H3 (CA); Matthews, Richard, Peterborough Ontario K9J 6M8 (CA)
(74) Representative: Evens, Paul Jonathan

(57) **Abstract**

An asymmetric or off-center bottom bracket assembly (200) suitable for a bicycle frame or other similar wheeled vehicle. According to an embodiment, the bottom bracket assembly (200) comprises a shell or housing (210) having a chain ring section (214) configured for coupling a chain ring and a pedal crank section (212) configured for receiving a pedal crank. Each of the chain ring and the pedal crank sections (214,212) include a receiver for mounting or seating a bearing. According to an embodiment, the bottom bracket assembly (200) is configured to mount the bearing (242) or end of the chain ring section (214) closer to the chain ring than the bearing (240) or end of the pedal crank section (212) to the pedal crank. According to an embodiment, the pedal crank section (212) is configured with a linear dimension greater than the chain ring section (214). According to another embodiment, the pedal crank section and the chain ring section have the same linear dimensions and the bottom bracket assembly is mounted asymmetrically or off-center to the center line of the bicycle frame. According to another embodiment, the bearing mounted in the chain ring section is larger than the bearing mounted in the pedal crank section of the bottom bracket assembly.

## Description

### FIELD OF THE INVENTION

This invention relates to wheeled vehicles or cycles, and more particularly to an asymmetrical or off-center bottom bracket suitable for a bicycle.

### BACKGROUND OF THE INVENTION

The bottom bracket of a bicycle supports the crank connecting the two pedals and chain ring. Traditionally the bottom bracket is approximately symmetrical about the central plane of the bicycle, being designed to secure two bearings of equal diameter at equal distances on either side of the center line. The bottom bracket is, in turn, connected to the frame of the bicycle, usually at the junction of the down tube, the seat tube and the two chain stays.

As bicycles have developed, different size bearings have been used and they have been mounted on bottom brackets of different widths. Also different methods of securing the bearings to the bottom bracket shell have been used.

One known configuration for a bottom bracket comprises a 68mm wide bottom bracket shell for use with a 17mm diameter crank shaft with the bearings positioned inside the frame's bottom bracket shell. Shimano™ Inc. developed a configuration named "Hollowtech II" where the bottom bracket remained 68mm wide but the crank axle diameter was 24mm, Shimano™ chose larger diameter bearings supported in "cups", which when properly assembled into the frame, extended approximately 11mm outward from either side of the bottom bracket shell, making the overall width 90mm. The Trek™ Bicycle Corporation introduced a "BB90" configuration, which also used a 24mm crank but enlarged the bottom bracket to 90mm wide which included the bearings. The "BB86" configuration developed by Scott™ USA supports a 24mm diameter crank in an 86mm wide bottom bracket with the bearings supported partially outside the bottom bracket shell and remaining 90mm wide. The "BB30" design by the Cannondale™ Bicycle Corporation supports a 30mm diameter crank in a larger diameter bottom bracket and with the bearings mounted internally but the bottom bracket is only 68mm wide.

These known designs comprise bottom brackets which are symmetrical with the center-line or plane of the bicycle, i.e. the sides of the bottom bracket shell and the bearings are equidistant from the center-line of the bicycle.

Such geometry does not take in to account the fact that the forces are different on the two ends of the crank and that space restrictions are different on the two sides of the bicycle. One side of the bicycle, normally the right side, has a chain ring which takes up space and exerts forces on the crank and frame, which are not present on the other side of the bicycle.

- Accordingly, there remains a need for improvement in the art.

### BRIEF SUMMARY OF THE INVENTION

The present invention is directed to an asymmetrical or off-center bottom bracket configuration suitable for a bicycle or other similar wheeled vehicles or cycles.

According to one embodiment, the present invention comprises a bottom bracket assembly suitable for a bicycle frame, the bottom bracket assembly comprises: a shell having a first section and a second section; the first section having a longitudinal or axial dimension, and the second section having a longitudinal or axial dimension, and the longitudinal dimension of the first section being greater than the longitudinal dimension of the second section; the first section having a receiver configured for mounting a first bearing, and the second section having a receiver configured for mounting a second bearing; and the shell being configured for receiving a pedal crank shaft and the first and second bearings rotatably engaging the pedal crank shaft.

According to another embodiment, the present invention comprises a cycle frame comprising: a bottom bracket; a top tube, a head tube, a down tube and a seat tube; one end of the top tube and one end of the down tube being affixed to the head tube, and another end of the top tube being affixed to one end of the seat tube; first and second seat stays, and first and second chain stays, and one end of each of the seat stays being affixed to the seat tube, and another end of each of the seat stays being affixed to respective ends of the chain stays; another end of the down tube and another end of the seat tube and another end of each of the chain stays forming a juncture for connecting or affixing the bottom bracket; the bottom bracket comprising a cavity configured for receiving a pedal crank shaft, the pedal crank shaft having a pedal crank end and a chain ring end, and the bottom bracket comprising a first section and a second section, each of the sections having a longitudinal or axial dimension, and the longitudinal or axial dimension of the second section being less than the longitudinal or axial dimension of the first section, and the first section being configured for receiving the pedal crank end of the pedal crank shaft and the second section being configured for receiving the chain ring end of the pedal crank shaft.

According to another embodiment, the present invention comprises a bottom bracket assembly for a bicycle frame, the bottom bracket assembly comprising: a housing, the housing having a receiver configured for mounting a first bearing, and another receiver configured for mounting a second bearing, and the first and second bearings being configured for rotatably engaging a pedal crank shaft; and the housing being affixed to the bicycle frame in a position in relation to a center-line of the bicycle frame wherein the first bearing and the second bearing are offset from the center-line at different distances.

Other aspects and features of the present invention will become apparent to those ordinarily skilled in the art upon review of the following exemplary embodiments of the invention in conjunction with the accompanying figures.

### BRIEF DESCRIPTION OF THE DRAWINGS

Reference will now be made to the accompanying drawings, which show by way of example, embodiments according to the present invention, and in which:

Fig. 1 shows a bicycle configured with an asymmetrical or off-center bottom bracket according to an embodiment of the present invention;

Fig. 2 is a sectional view of the bottom bracket of Fig. 1 taken through line A-A; and

Fig. 3 is a sectional view of an asymmetric or off-center bottom bracket according to another embodiment of the invention.

Like reference numerals indicate like elements or components in the drawings.

### DETAILED DESCRIPTION OF THE EMBODIMENTS

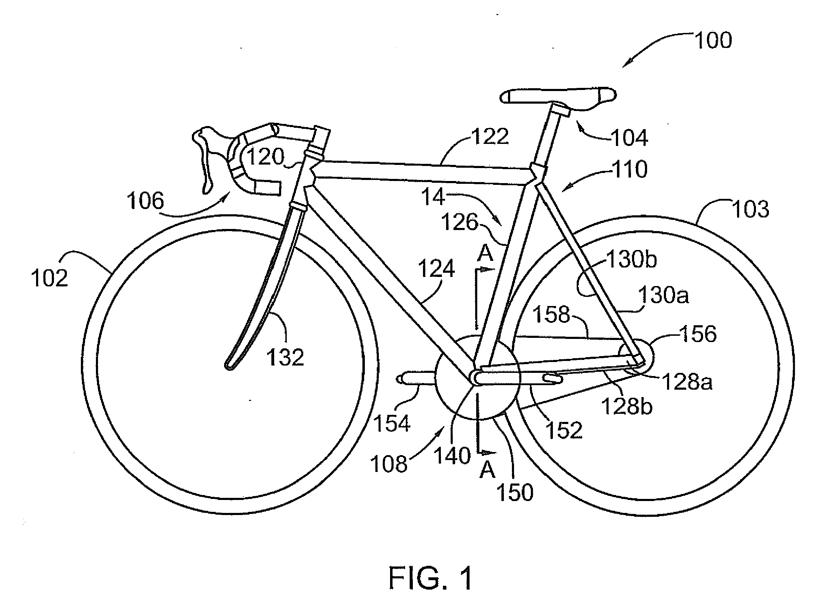

Reference is first made to Fig. 1, which shows a bicycle indicated generally by reference 100 and configured with an asymmetrical or off-center bottom bracket according to an embodiment of the present invention. While embodiments according to the present invention are described in the context of a bicycle, it will be appreciated and understood that the invention may be suitable for other frame geometries or wheeled vehicle configurations.

The bicycle 100 comprises a frame indicated generally by reference 110 and front and rear wheels indicated by references 102 and 103, respectfully. The frame 110. is assembled with a seat and seat post assembly 104, a handle bar and headstock indicated by reference 106, and a peddle crank assembly 108, in known manner. The frame 110 comprises a headtube 120, a top tube 122, a down tube 124, a seat tube 126, a pair of chain stays 128a, 128b and a pair of seat stays 130a, 130b, which are affixed at respective ends using known techniques, such as welding or detachable fasteners, etc., to form the bicycle frame 110, as will be familiar to one skilled in the art. It will also be apparent to one skilled in the art that the frame 110 can comprise additional tubes or tube configurations, and the frame 110 depicted in Fig. 1 is merely illustrative of a typical bicycle frame.

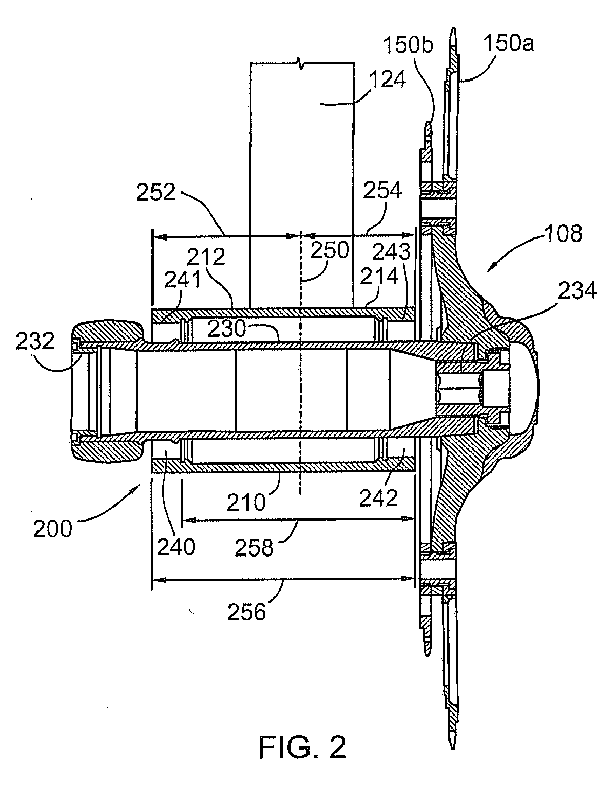

The frame 110 includes a bottom bracket according to an embodiment of the invention and indicated generally by reference 140. The bottom bracket 140 is configured to receive the pedal crank assembly 108 as described in more detail below. The pedal crank assembly 108 comprises one or more chain rings 150 (for example, indicated individually by references 150a and 150b in Fig. 2) and left and right pedal crank arms or cranks indicated by references 152 and 154, respectively.

The front wheel 102 is connected in known manner to the frame 110 through a front fork assembly 132. Similarly, the rear wheel 103 is connected or attached to the frame 110 at the junction of the chain stays 128 and the seat stays 130. In known manner, the rear wheel 103 includes a gear component (e.g. gear or gear pack) 156 which is coupled to the pedal crank assembly 108, i.e. the chain wheel(s) 150, via a chain 158 for example. The bottom bracket 140 couples and supports the pedal crank assembly 108. The rear wheel 103 is driven by the rotational forces applied to the pedal crank assembly 108 and transferred to the rear gear 156 through the chain wheel 154 and the chain 158.

Reference is next made to Fig. 2, which shows the bottom bracket 140 in more detail according to an embodiment of the invention. In Fig. 2, the bottom bracket assembly is indicated generally by reference 200 and comprises a bottom bracket shell or housing 210, The bottom bracket shell or housing 210 is connected to the bicycle frame 110 (Fig. 1) at the juncture formed by the down tube 124, the seat tube 126 (Fig. 1) and the chain stays 128 (Fig. 1) using suitable fastening techniques, such as, molding, bonding, brazing or welding for example. The bottom bracket shell 210 comprises a generally cylindrical shell or cavity or tubular configuration or housing, It will however be appreciated that the bottom bracket shell or cavity need not be cylindrically shaped. For example, the bottom bracket shell can be configured to open into the interior of the frame or be formed as an integral part of the frame, The bottom bracket shell 210 is made using known frame manufacturing techniques, such as, casting, net-molding, or co-molding, for example.

The bottom bracket shell 210 is configured to receive the pedal crank assembly 108 (Fig. 1). As shown in Fig. 2, the pedal crank assembly comprises a pedal crank shaft indicated by reference 230 which fits (e.g. a slide fit) inside the bottom bracket shell 210. The bottom bracket assembly 200 includes a first bearing (e.g, a left bearing) 240 and a second bearing (e.g. a right bearing) indicated by reference 242. The two crank bearings 240 and 242 are seated or positioned in respective bearing seats or receivers indicated by references 241 and 243, respectively, and support and rotatably engage the crank 230. According to an embodiment, the bearing seats or receivers 241 and 243 comprise a recess or channel formed in the bottom bracket shell 210 and are configured for receiving the respective bearings. According to another embodiment or implementation, the bearing receivers 241, 243 comprise bearing "cups" (e.g, press-fit cups or net-molded cups) that are mounted (e,g, press-fitted or threaded) inside the respective ends of the bottom bracket shell 210 and are configured to hold the respective bearings 241, 243. As shown in Fig. 2, the pedal crank shaft 230 includes a first threaded section 232 for engaging and connecting the left crank arm 152 (Fig. 1) and a second threaded section 234 for engaging and connecting the right crank arm 154 (Fig. 1) and the chain rings 150a, 150b. The particular specification and implementation details of the crank 230 and the pedal crank assembly 108, and any variations thereof, will be familiar and within the understanding of one skilled in the art.

According to an embodiment and as depicted in Fig. 2, the bottom bracket 200 comprises a first section (e.g. a left side section) indicated by reference 212 and a second section (e.g. a right side section) indicated by reference 214, According to an embodiment, the bottom bracket 200 is configured in an asymmetrical configuration with the first or left section 212 being offset from a vertical center-line of the frame 110 indicated by reference 250 by a distance or dimension indicated by reference 252, and the second (e.g. right) section 214 being offset from the vertical center-line 250 by a distance or dimension indicated by reference 254. According to an embodiment, the vertical center-line 250 corresponds to a plane extending through the center of bicycle frame 110 (Fig. 1), i.e. which generally bi-sects the top tube, down tube and seat tube, or corresponds to a center line of the top tube, down tube or seat tube. The vertical center-line 250 is generally oriented in the direction of forward motion (or backward motion) of the bicycle 100. According to another embodiment, the vertical center-line is defined in relation to the vertical center plane of the rear wheel 103 (Fig. 1). Such a configuration is suitable for a frame where the seat tube is offset from the center plane, or where the front and rear wheels are configured on different center planes (for example, in a folding or collapsible bicycle).

As shown in Fig. 2, the width of the bottom bracket assembly 200 is denoted by a dimension 256 and the distance between the crank bearings 240 and 242 is denoted by a dimension 258. The dimension 256 comprises a longitudinal or axial dimensional taken generally along the longitudinal axis of the bottom bracket assembly 200, which is generally perpendicular to the longitudinal dimension of the bicycle 100 or the frame 110. According to an embodiment, the first or left side bearing 240 is positioned at a distance indicated by the dimension 252 from the center-line 250 which is greater than the distance indicated by dimension 254 of the second or right side bearing 242 from the center-line 250. According to this embodiment, positioning the right side bearing 242 closer to the chain wheel or chain rings 150 and the pedal crank assembly 108 facilitates the distribution of forces from the pedal crank assembly 108 to the bottom bracket assembly 200 and through the frame 110. According to another aspect, there is less space at the right side of the bottom bracket assembly 200 with the pedal crank assembly 108, and the configuration of the asymmetrical bottom bracket 200 according to the described embodiment provides a geometry that allows the chain ring(s) 150 and the pedal crank assembly 108 to be placed closer to the center-line of the bicycle frame 110.

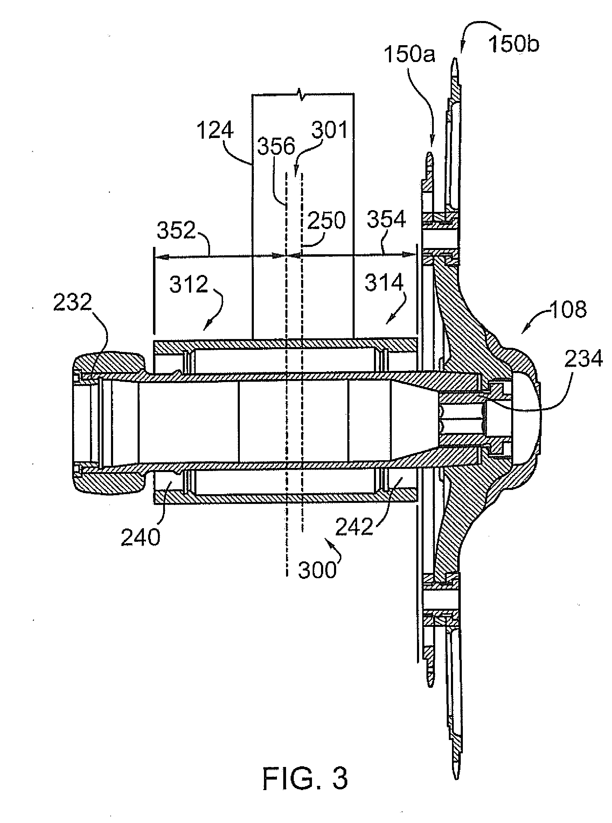

Reference is made to Fig. 3, which shows a bottom bracket assembly 300 according to another embodiment of the invention. The bottom bracket assembly 300 is similar in design to the bottom bracket assembly 200 described above with reference to Fig. 2. The bottom bracket assembly 300 comprises a first section 312 and the second section 314. According to this embodiment, the first (e.g. left) 312 and second (e.g. right) 314 sections have the same dimensions, indicated by references 352 and 354 respectively, as measured from the mid-point of the bottom bracket assembly 300, i.e. the mid-point of the longitudinal or axial dimension indicated by reference 356 in Fig. 3. As depicted in Fig. 3, the bottom bracket assembly 300 is attached to the frame 110 in an offset position indicated by reference 301. By connecting or mounting the bottom bracket assembly 300 to the frame 110 in a position off center to the center-line 250, an asymmetric offset is achieved and the chain rings 150(s) and the pedal crank assembly 108 are positioned closer to the center-line 250 of the frame 110. According to the exemplary embodiment depicted in Fig. 3, the dimensions 352, 354 of the left and right sections 312, 314 are both 39.50 mm.

Reference is made back to Fig. 2. According to another embodiment, the first and second crank bearings 240 and 242 comprise different size or diameter bearings. According to an embodiment, the second bearing 242 (i.e. the bearing closest to the chain rings 150) is larger than the first or left side bearing 240. The larger bearing 242 allows the forces from the chain rings 150 and pedal crank assembly 108 to be absorbed or distributed through the bottom bracket assembly 200 and the bicycle frame 110. According to another aspect, by having the second or right section 214 offset from the center-line 250 a shorter distance than the first or left section 212 places the chain wheel(s) or chain ring(s) 150 and the pedal crank assembly 108 closer to the larger bearing 242 which facilitates the distribution of forces through the bottom bracket assembly 200 and the frame 110. According to an embodiment, the left side bearing is offset a greater distance (i.e. indicated by the dimension 252) from the center-line 250, and this configuration allows the first crank bearing 240 to be smaller because there will be reduced forces applied from the pedal crank assembly 108.

According to an exemplary embodiment, the bottom bracket assembly 200 is configured with the following dimensions for an exemplary adult road bicycle:

| | |
|---|---|
| width 256 of the bottom bracket 200 - | 79.0 mm |
| length 250 of the first (e.g. left) section 212 - | 45.0 mm |
| length 252 of the second (e.g, right) section 214 - | 34.0 mm |
| distance 258 between the bottom bearings 240, 242 - | 60.0 mm |

It will be understood that these dimensions are exemplary and may be modified for different bicycle sizes and types (e.g. junior, adult, road racing, mountain, etc.), and for different configurations, such as, bearing mounts using press-fit cups, net-molded cups, etc.

It will be appreciated that according to the described embodiment, the bicycle frame 110 and the asymmetrical bottom bracket assembly 200 provide a configuration that can better absorb or distribute forces generated through the pedal crank assembly 108.

In summary and according to an embodiment, there is provided an asymmetrical or off-center bottom bracket comprising a shell or tubular member having a first section and a second section; the first section having a longitudinal or axial dimension, and the second section having a longitudinal or axial dimension, and the longitudinal or axial dimension of the first section being greater than the longitudinal or axial dimension of the second section; the first section having a receiver configured for mounting a first bearing, and the second section having a receiver configured for mounting a second bearing; and the shell being configured for receiving a pedal crank shaft and the first and second bearings rotatably engaging the pedal crank shaft.

In summary and according to another embodiment, there is provided a bottom bracket assembly for a bicycle frame, the bottom bracket assembly comprises: a shell or a tubular housing, the shell or tubular housing having a receiver for mounting a first bearing, and another receiver for mounting a second bearing, and the first and second bearings being configured for rotatably engaging a pedal crank shaft; and the shell or tubular housing being affixed to the bicycle frame in a position in relation to a center-line of the bicycle frame wherein the first bearing and the second bearing are offset from the center-line at different distances.

In summary and according to another embodiment there is provided a cycle frame comprising: a bottom bracket; a top tube, a head tube, a down tube and a seat tube; one end of the top tube and one end of the down tube being affixed to the head tube, and another end of the top tube being affixed to one end of the seat tube; first and second seat stays, and first and second chain stays, and one end of each of the seat stays being affixed to the seat tube, and another end of each of the seat stays being affixed to respective ends of the chain stays; another end of the down tube and another end of the seat tube and another end of each of the chain stays forming a juncture for connecting to or forming the bottom bracket; the bottom bracket comprising a shell or cavity configured for receiving a pedal crank shaft, the pedal crank shaft having a pedal crank end and a chain ring end, and the bottom bracket comprising a first section and a second section, each of the sections having a longitudinal dimension, and the longitudinal dimension of the second section being less than the longitudinal dimension of the first section, and the first section being configured for receiving the pedal crank end of the pedal crank shaft and the second section being configured for receiving the chain ring end of the pedal crank shaft.

The present invention may be embodied in other specific forms without departing from its spirit or essential characteristics. The embodiments described and disclosed are to be considered in all aspects only as illustrative and not restrictive. The scope of the invention is, therefore, indicated by the appended claims rather than by the foregoing description. All changes which come within the meaning and range of equivalency of the claims are to be embraced within their scope.

## Claims

1. A bottom bracket assembly suitable for a bicycle frame, said bottom bracket assembly comprising:
a shell comprising a first section and a second section;
said first section having a longitudinal dimension, and said second section having a longitudinal dimension, and the longitudinal dimension of said first section being greater than the longitudinal dimension of said second section;
said first section having a receiver configured for mounting a first bearing, and said second section having a receiver configured for mounting a second bearing; and
said shell being configured for receiving a pedal crank shaft and said first and second bearings rotatably engaging said pedal crank shaft,

2. The bottom bracket as claimed in claim 1, wherein said second bearing comprises a bearing larger than said first bearing.

3. The bottom bracket as claimed in claim 1, wherein the bicycle frame has a center-line and the longitudinal dimension of said second section positions said second bearing closer to the center-line than the first bearing, and said second section is configured for receiving the pedal crank shaft with a pedal crank assembly.

4. The bottom bracket as claimed in claim 3, wherein said second bearing comprises a bearing larger than said first bearing.

5. A cycle frame comprising:
a bottom bracket;
a top tube, a head tube, a down tube and a seat tube;
one end of said top tube and one end of said down tube being affixed to said head tube, and another end of said top tube-being affixed to one end of said seat tube;
first and second seat stays, and first and second chain stays, and one end of each of said seat stays being affixed to said seat tube, and another end of each of said seat stays being affixed to respective ends of said chain stays;
another end of said down tube and another end of said seat tube and another end of each of said chain stays forming a juncture for connecting to said bottom bracket;
said bottom bracket comprising a shell configured for receiving a pedal crank shaft, said pedal crank shaft having a pedal crank end and a chain ring end, and said bottom bracket comprising a first section and a second section, each of said sections having a longitudinal dimension, and the longitudinal dimension of said second section being less than the longitudinal dimension of said first section, and said first section being configured for receiving the pedal crank end of said pedal crank shaft and said second section being configured for receiving the chain ring end of said pedal crank shaft.

6. The frame as claimed in claim 5, wherein said first section comprises a receiver configured for mounting a first bearing for rotatably engaging the pedal crank end of said pedal crank shaft, and wherein said second section comprises a receiver configured for mounting a second bearing for rotatably engaging the chain wheel end of said pedal crank shaft.

7. The frame as claimed in claim 6, wherein said second bearing comprises a bearing larger than said first bearing.

8. A bottom bracket assembly for a bicycle frame, said bottom bracket assembly comprising:
a housing,
said housing having a receiver configured for mounting a first bearing, and another receiver configured for mounting a second bearing, and said first and second bearings being configured for rotatably engaging a pedal crank shaft; and
said housing being affixed to the bicycle frame in a position in relation to a center-line of the bicycle frame wherein said first bearing and said second bearing are offset from the center-line at different distances,

9. The bottom bracket assembly as claimed in claimed in claim 8, wherein said first bearing is smaller than said second bearing.

10. The bottom bracket assembly as claimed in claim 8, wherein said second bearing is positioned closer to the center-line of the bicycle frame than said first bearing.

11. The bottom bracket assembly as claimed in claimed in claim 10, wherein said second bearing is larger than said second bearing.

12. The bottom bracket assembly as claimed in claim 8, wherein said second bearing is configured for engaging said pedal crank shaft with one or more attached chain rings.
